Europäisches Patentamt

**European Patent Office**

Office européen des brevets

(19)

(11) Veröffentlichungsnummer: **0 057 854**
**B1**

(12) **EUROPÄISCHE PATENTSCHRIFT**

(45) Veröffentlichungstag der Patentschrift:
**11.07.84**

(51) Int. Cl.³: **H 04 M 1/64**

(21) Anmeldenummer: **82100550.1**

(22) Anmeldetag: **27.01.82**

(54) **Automatischer Anrufbeantworter.**

(30) Priorität: **10.02.81 DE 3104564**

(43) Veröffentlichungstag der Anmeldung:
**18.08.82 Patentblatt 82/33**

(45) Bekanntmachung des Hinweises auf die Patenterteilung:
**11.07.84 Patentblatt 84/28**

(84) Benannte Vertragsstaaten:
**AT BE CH GB LI NL SE**

(56) Entgegenhaltungen:
**DE - A - 2 525 025**
**DE - A - 2 853 355**
**DE - A - 2 854 401**

(73) Patentinhaber: **Neumann Elektronik GmbH,
Bülowstrasse 104 - 110, D-4330 Mülheim 1 (DE)**

(72) Erfinder: **Neumann, Dirk, Dipl.-Ing., Schemelsbruch 11,
D-4330 Mülheim 1 (DE)**

(74) Vertreter: **Feder, Heinz, Dr. et al,
Dominikanerstrasse 37 Postfach 11 04 26,
D-4000 Düsseldorf 11 (DE)**

EP 0 057 854 B1

## Beschreibung

Die Erfindung betrifft einen automatischen Anrufbeantworter zur Abgabe mindestens eines vorgegebenen Ansagetextes in die Fernsprechleitung mit einem mikroprozessorgesteuerten elektronischen Textgeber zur Abgabe von in digitaler Form in Festwertspeichern gespeicherten Textteilen, wobei ein Ansagetext jeweils aus fest vorgegebenen Textteilen und aus variablen, aus Ziffern bestehenden in die fest vorgegebenen Textteile einfügbaren Textteilen zusammengesetzt ist.

Es sind automatische Anrufbeantwerter bekannt (DE-A-28 54 401 und DE-B-28 54 516), bei denen ein Ansagetext, der bei Anruf in die Fernsprechleitung abgegeben werden soll, vorher vom Benutzer aufgesprochen werden muss, wobei das analoge Sprachsignal des aufgesprochenen Textes mittels eines Analog-Digitalwandlers, der beispielsweise nach dem bekannten Delta-Modulationsverfahren arbeiten kann, in ein digitales Sprachsignal umgewandelt wird, das in einem Festkörperspeicher gespeichert wird und bei Bedarf mittels eines Digital-Analogwandlers als analoges Sprachsignal wieder abgegeben wird.

Diese bekannten Anrufbeantworter haben den Nachteil, dass der abzugebende Ansagetext vorher vom Benutzer aufgesprochen werden muss, was für viele, sprachlich wenig geschulte Benutzer eine grosse Unbequemlichkeit darstellt. Ausserdem geht der aufgesprochene und in einem flüchtigen Festkörperspeicher gespeicherte Ansagetext verloren, wenn während der Abwesenheit des Benutzers ein Spannungsausfall die Anlage vorübergehend ausser Betrieb setzt.

Es ist weiterhin ein Anrufbeantworter bekannt (DE-A-28 53 355), bei dem zusätzlich zu dem aufgesprochenen Ansagetext ein fest eingespeicherter Text abgegeben wird, der aus fest vorgegebenen Textteilen und aus variablen, aus Ziffern bestehenden, in die fest vorgegebenen Textteile einfügbaren Textteilen zusammengesetzt ist. Bei diesem bekannten Anrufbeantworter ist der fest eingespeicherte Text in digitaler Form in einem Festwertspeicher eingespeichert, und die Zusammensetzung der Textteile erfolgt mittels eines mikroprozessorgesteuerten elektronischen Textgebers. Der fest eingespeicherte Text besteht aus einer Zeitangabe, um für den Benutzer den Zeitpunkt eines aufgezeichneten Anrufes festzuhalten. Auch dieser bekannte Anrufbeantworter weist jedoch den Nachteil auf, dass der die Information für den Anrufer enthaltende Text vom Benutzer eigens aufgesprochen werden muss, und bei Verwendung von flüchtigen Festkörperspeichern der aufgesprochene und eingespeicherte Text bei einem Spannungsausfall verlorengeht.

Es sind weiterhin elektronische Textgeber bekannt, mit denen eine grössere Anzahl von Ansagetexten abgegeben werden kann, die aus verschiedenen fest eingespeicherten Textteilen unterschiedlicher zeitlicher Länge zusammensetzbar sind. Die Textteile können z.B. von einem geschulten Sprecher aufgesprochen sein und sind in Festwertspeichern festgehalten. Die Steuerung des Textgebers kann von einer Datenverarbeitungsanlage, beispielsweise einem Mikrocomputer aus erfolgen.

Die der Erfindung zugrunde liegende Aufgabe besteht darin, einen automatischen Anrufbeantworter der eingangs erwähnten Bauart zu schaffen, bei dem der Benutzer einerseits keinerlei Texte aufsprechen muss, andererseits aber die Möglichkeit hat, bestimmte Textteile, wie Datumsangaben, Uhrzeitangaben oder die Mitteilung einer Ausweich-Telefonnummer frei vorzugeben. Die frei vorgebbaren Textteile sollen aber auch dann erhalten bleiben, wenn die Anlage durch einen Spannungsausfall über kürzere oder längere Zeit ausser Betrieb ist.

Die Lösung dieser Aufgabe erfolgt erfindungsgemäss dadurch, dass für jeden einer frei vorgebbaren Ziffer entsprechenden Textteil ein mechanisch gesteuerter Vorwahlschalter mit mehreren Schaltstellungen vorgesehen ist, wobei jeder Schaltstellung eine Zahl aus der Menge der ganzen Zahlen von 0 bis 9 oder eine «Aus»-Stellung zugeordnet ist und durch die jeweilige Stellung eines Vorwahlschalters festgelegt ist, welche gespeicherte Ziffer als variabler Textteil an einer durch diesen Schalter vorgegebenen Stelle des Ansagetextes programmgesteuert eingefügt wird.

Vorteilhafte Ausführungsformen des erfindungsgemässen Anrufbeantworters sind Gegenstand der Unteransprüche.

Wie weiter unten anhand eines Ausführungsbeispieles näher beschrieben wird, ist es bei dem erfindungsgemässen Anrufbeantworter möglich, mehrere verschiedene Ansagetexte vorzugeben, so z.B. Ansagetexte, in denen eine Uhrzeit und/oder ein Datum mitgeteilt werden, aus denen der Anrufer ersehen kann, wann der Benutzer wieder erreichbar ist, oder ein Ansagetext, in dem eine Ausweich-Telefonnummer mitgeteilt wird, unter der der Benutzer erreichbar ist.

An den Vorwahlschaltern gibt der Benutzer die in die Textteile gemäss dem vorgegebenen Programm einzufügenden Ziffern vor, die dann in die jeweilige Ansage eingefügt werden. Diese Ziffernvorgabe durch mechanisch gesteuerte Vorwahlschalter hat den grossen Vorteil, dass einerseits eine grosse Variabilität in den frei vorgebbaren Textteilen besteht, der Benutzer aber nichts aufsprechen muss, und die eingestellten Ziffernwerte bei einem Spannungsausfall nicht verlorengehen, sondern die Anlage beim Wiederkehren der Spannung sofort wieder betriebsbereit ist und die richtige eingestellte Ansage abgeben kann.

Die Anzahl der Vorwahlschalter und die Anzahl der Schaltstellungen eines einzelnen Vorwahlschalters richtet sich nach dem bestimmten Einsatzfall und der Anzahl und Stellenzahl der vorzugebenden, aus Ziffern bestehenden Textteilen. So genügen beispielsweise für eine reine Datumsangabe sechs oder gar fünf Vorwahlschalter. Von den beiden der Tagesangabe zugeordneten Schaltern muss einer zehn Schaltstellungen aufweisen, während der andere grundsätzlich nur vier Schaltstellungen aufzuweisen braucht. Bei der Monatsangabe muss einer der Schalter zehn Schaltstellungen, der andere nur zwei Schaltstellungen aufweisen. Will man eine Ausweichrufnummer mit bis zu 16 Stellen vorgeben, so benötigt man hierzu 16 Vorwahlschalter, von denen jeder zweckmässigerweise mindestens zehn Schaltstellungen besitzt. Wie weiter unten gezeigt wird, kann es, wenn verschiedene Kombinationen von Schaltern zur Vorgabe benutzt werden sollen, zweckmässig sein, wenn jeder Vorwahlschalter ausser den zehn Schaltstellungen für die Ziffer 0 bis 9 auch eine eigene «Aus»-Stellung besitzt.

Im folgenden wird anhand der beigefügten Zeichnungen ein Ausführungsbeispiel für den erfindungsgemässen Anrufbeantworter näher erläutert.

In den Zeichnungen zeigen:

Fig. 1 ein Blockschaltbild eines Anrufbeantworters nach der Erfindung;
Fig. 2a u. 2b in vergrösserter schematischer Darstellung ein Schalterfeld von 16 Vorwahlschaltern 14.1 – 14.16 für einen Anrufbeantworter nach Fig. 1.

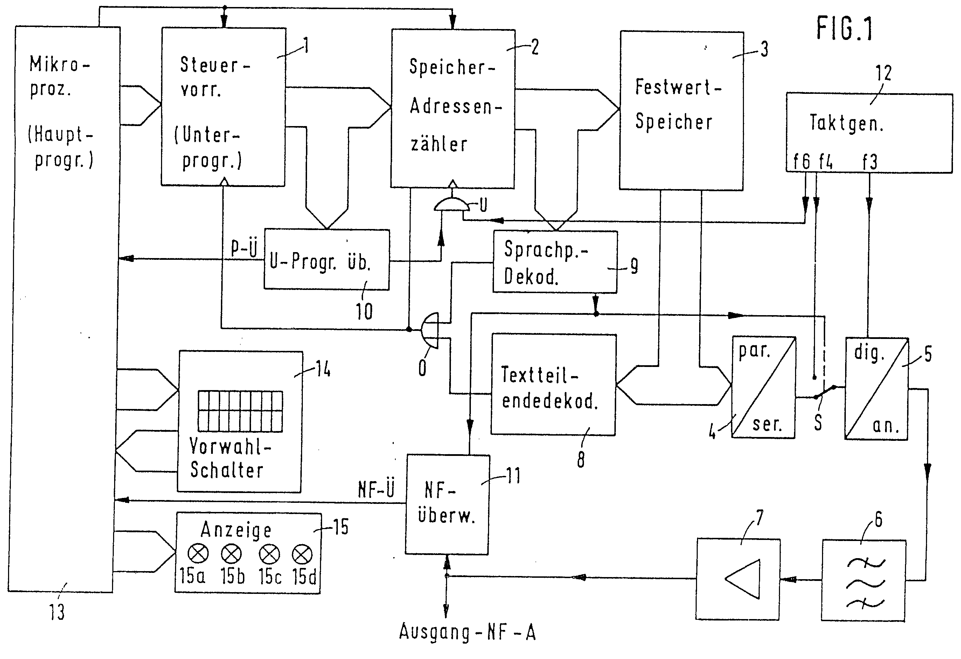

In Fig. 1 sind jeweils nur die für die Erfindung wesentlichen Teile eines Anrufbeantworters, nämlich der elektronische Textgeber mit seinen, einen Mikroprozessor enthaltenden Steuervorrichtungen, sowie die Vorwahlschalter und Anzeigevorrichtungen schematisch dargestellt. Der gesamte Programmablauf wird von der einen Mikroprozessor enthaltenden Hauptprogramm-Steuerung 13 gesteuert, welche einerseits durch Abfrage der Vorwahlschalter 14 feststellt, welches Programm der Benutzer wünscht, und wenn dieses Programm als richtig und sinnvoll erkannt ist, an einer Anzeigevorrichtung 15 anzeigt, welches Programm läuft. Der Start einer Ansage gemäss dem vom Benutzer eingestellten Hauptprogramm erfolgt auf ein externes Startsignal hin, das entweder von einer externen, nicht dargestellten Anruferkennung oder durch Drücken einer ebenfalls nicht dargestellten Kontrolltaste gegeben wird.

Jedes Hauptprogramm besteht aus mehreren Unterprogrammen, gemäss denen verschiedene vorgegebene Textteile zusammengesetzt werden. Der Programmablauf der Unterprogramme wird von einer Steuervorrichtung 1 aus gesteuert.

Alle in der Gesamtheit der abzugebenden Texte vorkommenden Textteile sind nach dem bekannten Prinzip der Delta-Modulation digitalisiert und in dem Festwertspeicher 3 (z.B. ROM, EPROM) nacheinander abgelegt. Die Anfangsadressen dieser im Festwertspeicher 3 abgelegten Textteile sind in bekannter Weise im Steuerprogramm festgelegt und werden von der Steuervorrichtung 1 an den Speicher-Adressenzähler 2 gegeben. Die Enden aller Textteile sind durch nicht hörbare Marken in den digitalen Daten gekennzeichnet. Diese Marken sind bei allen Textteilen gleich und nicht an eine bestimmte Datenspeicheradresse gebunden. Die Ausgabe der Textteile erfolgt in der Weise, dass der Speicher-Adressenzähler 2 auf die Festwert-Speicheranfangsadresse eines beliebigen Textteiles voreingestellt wird und von diesem Zählerstand ausgehend weiterschaltet, und zwar gesteuert durch ein vom Taktgenerator 12 ausgehendes Taktsignal mit der Frequenz f6. Auf diese Weise wird der Inhalt einer Speicherzelle nach der anderen freigegeben und dem Digital-Analogwandler 5 zugeführt.

Der Festwertspeicher 3 ist in bekannter Weise in byteweiser Organisation aufgebaut, d.h. unter jeder Adresse werden 8 Bit gleichzeitig an acht Ausgänge gegeben. Aus diesem Grund muss von dem Digital-Analogwandler 5, der nur serielle 1-Bit-Informationen verarbeiten kann, ein Parallel-Seriell-Wandler 4 eingeschaltet werden.

Die am Ende eines Textteiles auftretende Markierung wird von der Textteilende-Decodiervorrichtung 8 erkannt und über ein ODER-Gatter O wird ein entsprechendes Textteilendesignal der Steuervorrichtung 1 für das Unterprogramm und dem Speicher-Adressenzähler 2 zugeführt.

Die Erzeugung vorgegebener Sprachpausen zwischen den einzelnen Textteilen erfolgt in der Weise, dass entsprechend dem eingegebenen Programm der Speicher-Adressenzähler 2 auf eine Adresse innerhalb eines vorgegebenen Adressenbereiches eingestellt wird, in dem der Festwertspeicher 3 selbst nicht bestückt ist. Dabei kann so vorgegangen werden, dass dem Pausenende ein bestimmter fester Wert im Speicher-Adressenzähler zugeordnet ist, der für alle Sprachpausen der gleiche ist. Unterschiedlich lange Pausen lassen sich dann durch die Programmierung unterschiedlicher Anfangsadressen innerhalb dieses genannten Bereiches realisieren.

Auf diese Weise können auch längere Sprachpausen durch Aneinanderreihung mehrerer Pausenabschnitte erzielt werden. Die vom Speicher-Adressenzähler 2 abgegebenen Pausenanfangs- und Pausenende-Markierungen oder die Pausenende-Markierungen allein werden von der Sprachpausen-Decodiervorrichtung 9 erkannt. Es wird ein Sprachpausenende-Signal erzeugt, das ebenfalls über das ODER-GATTER O der Steuervorrichtung 1 und dem Speicher-Adressenzähler 2 zugeführt wird.

Zur Zusammensetzung eines bestimmten Textes aus den im Festwertspeicher 3 abgelegten Textteilen und den dazwischen auftretenden Sprachpausen werden die Textteil-Anfangsadressen und Sprachpausen-Anfangsadressen in der gewünschten Reihenfolge in das Programm der Steuerung 1 geschrieben. Beim Start des Textes und jeweils nach Erkennen eines Textteilendes durch die Textteilende-Decodiervorrichtung 8 oder eines Sprachpausenendes durch die Sprachpausen-Decodiervorrichtung 9 wird der Speicher-Adressenzähler 2 von der Steuerung 1 auf die nächste im Programm folgende Textteil-Anfangsadresse voreingestellt.

Der Digital-Analogwandler 5, der ständig vom Taktgenerator 12 mit einem Taktsignal der Frequenz f3 getaktet ist, gibt ein analoges Ausgangssignal ab, das durch einen Wiedergabefilter 6 läuft und dabei auf das für Sprachdurchsagen relevante Frequenzband begrenzt wird, wobei auch das für die Digitalisierung unvermeidliche Quantisierungsrauschen bedämpft wird. Über einen nachgeschalteten Verstärker 7 gelangt das Niederfrequenz-Signal zum Ausgang NF-A.

Damit am Eingang des Digital-Analogwandlers 5 während der Sprachpausen, in denen vom Festwertspeicher 3 keine Daten übermittelt werden, keine undefinierten Zustände auftreten, die zu Störsignalen am Wandlerausgang führen können, gibt die Sprachpausen-Decodiervorrichtung 9 während der Sprachpausen ein Steuersignal ab, durch das mittels eines Schalters S der Eingang des Digital-Analogwandlers 5 während der Sprachpausen mit einem Ausgang des Taktgenerators 12 verbunden wird, von dem aus dem Digital-Analogwandler 5 ein getaktetes Eingangssignal der Frequenz f4 zugeführt wird. Zweckmässig besitzt dieses Eingangssignal die Frequenz f4 = 1/2 × f3.

Eine Unterprogrammüberwachungsvorrichtung 10 kontrolliert den Programmablauf und gibt über ein UND-Gatter U, dem gleichzeitig das Taktsignal f6 zugeführt wird, an den Speicher-Adressenzähler 2 die Steuersignale zum Weiterschalten.

Unterprogrammenden werden über den Ausgang P-Ü zur Hauptprogrammsteuerung 13 weitergegeben.

Eine Vorrichtung 11 zur Überwachung des dem Ausgang NF-A zugeführten Niederfrequenz-Signals zeigt eine Störung in der Abgabe dieses Signals über den Ausgang NF-Ü an. Die Vorrichtung 11 kann als sehr empfindlich auf einen Ausfall des Niederfrequenz-Signals arbeitende Überwachungsvorrichtung ausgelegt werden, weil sie nur dann freigegeben wird, wenn «Text» programmiert ist, d.h. während der vorgegebenen Sprachpausen wird sie durch ein von der Sprachpausen-Decodiervorrichtung 9 abgegebenes Steuersignal abgeschaltet. Auf diese Weise wird eine sehr rasch arbeitende Überwachung des abgegebenen Niederfrequenz-Signals erreicht.

Die Funktionsweise des Anrufbeantworters nach Fig. 1 ist folgende:

Es können beispielsweise vier Hauptprogramme vorgegeben sein.
1. Uhrzeit
Text: «Guten Tag, hier spricht ein Anrufbeanworter, bitte rufen Sie um XX Uhr wieder an.»
2. Datum
Text: «Guten Tag, hier spricht ein Anrufbeanworter, bitte rufen Sie am XX-ten ZZ-ten wieder an.
3. Datum und Uhrzeit

Text: «Guten Tag, hier spricht ein Anrufbeantworter, bitte rufen Sie am YY-ten um XX Uhr wieder an».
4. Ausweichrufnummer
Text: «Guten Tag, hier spricht ein Anrufbeantworter, bitte rufen Sie die Rufnummer xyz usw. an».

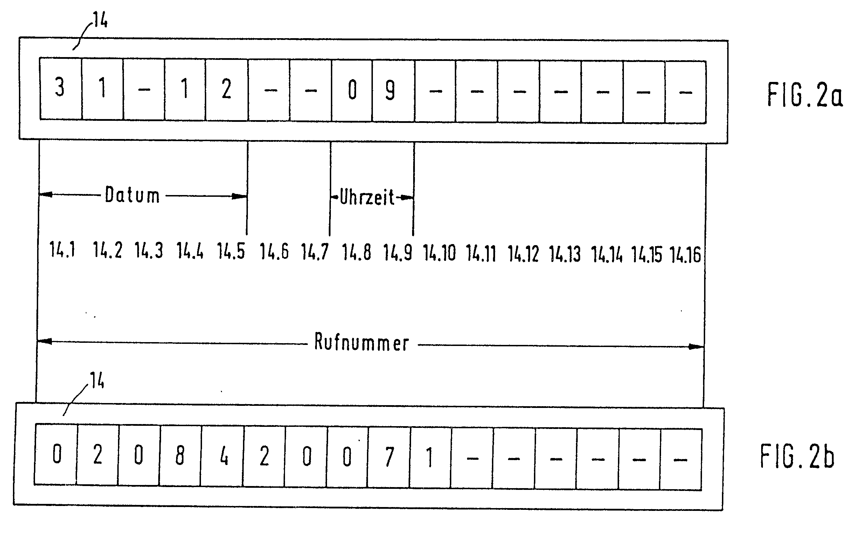

Die in diesen Programmen vorkommenden variablen Textteile, nämlich die Ziffernangaben, werden vom Benutzer an den Vorwahlschaltern 14 von Hand eingestellt. Die Vorwahlschalter 14 sind schematisch in den Fig. 2a und Fig. 2b dargestellt. Hierbei ist jeweils in Fig. 2a und Fig. 2b das gleiche Tastenfeld, jedoch mit verschiedenen Einstellkombinationen dargestellt.

In dem gewählten Ausführungsbeispiel stehen für die vier Programme zur Verfügung alle Uhrzeiten in vollen Stunden von 1 bis 24 Uhr, alle Kalenderdaten vom 1.1. bis 31.12. sowie die Ziffern von 0 bis 9 zur Zusammenstellung einer beliebigen Rufnummer bis zu 16 Stellen.

Jeder der Vorwahlschalter 14.1–14.16 des Schalterfeldes 14 besitzt 11 Schaltstellungen für die Zahlen 0 bis 9 und eine «Aus»-Stellung.

Will der Benutzer beispielsweise das Programm 3 einstellen, in dem dem Anrufer ein Datum und eine Uhrzeit mitgeteilt werden, so stellt er auf dem Schalterfeld 14 die Schalter so ein, wie es in Fig. 2a dargestellt ist. Mit den erten fünf Schaltern wird das Datum, beispielsweise der 31.12. eingestellt. Dann werden die Schalter 14.6 und 14.7 des Schalterfeldes 14 auf «Aus» gestellt, und mit den Schaltern 14.8 und 14.9 wird eine Uhrzeit, beispielsweise 9.00 Uhr, eingestellt.

Die Hauptsteuervorrichtung 13 fragt diese Einstellung des Schalterfeldes 14 ab und gibt beispielsweise durch Aufleuchten der Anzeigelampen 15a und 15b zu erkennen, dass Datum und Uhrzeit richtig eingestellt sind. Programmbedingt geben die Anzeigelampen also nicht nur an, dass überhaupt etwas eingestellt ist, sondern auch, dass die Einstellung richtig ist.

Diese Art der «Fehlererkennung» bietet dem Benutzer noch einen zusätzlichen Bedienungskomfort. Er hat die Möglichkeit, durch Einstellen oder Beheben eines «Fehlers» den Anrufbeantworter aus- und einzuschalten, ohne etwa die gesamte Einstellung auf «Aus» einstellen zu müssen, wenn er diese Einstellung als solche nicht ändern will.

Auf das Startsignal hin gibt der Anrufbeantworter den Ansagetext gemäss dem eingestellten Programm wieder.

Will der Benutzer beispielsweise, dass gemäss Programm 4 dem Anrufer eine Ausweichrufnummer mitgeteilt wird, so stellt er am Schalterfeld 14 die Schalter gem. Fig. 2b ein. Dabei beginnt die eingestellte Rufnummer mit einer eventuellen Vorwahlnummer mit Schalter 14.1 und endet im dargestellten Beispiel mit Schalter 14.10, während die Schalter 14.11 bis 14.16 auf «Aus» stehen. Selbstverständlich können auch längere Rufnummern mit bis zu 16 Stellen eingestellt werden.

Ist die Rufnummer richtig eingestellt, so leuchtet die Anzeigelampe 15c auf, und auf das entsprechende Startsignal läuft die Ansage, was durch die Signallampe 15d angezeigt wird.

Werden am Schalterfeld 14 beispielsweise mit den Schaltern 14.1 bis 14.5 nur ein Datum oder mit den Schaltern 14.8 und 14.9 nur eine Uhrzeit eingestellt, so wird der Ansagetext gemäss Programm 1 oder Programm 2 wiedergegeben.

An der eingestellten Schalterkombination mit den Schaltstellungen erkennt die Hauptprogrammsteuerung 13 das jeweils eingestellte Programm. So wird beispielsweise an der Einstellung «Aus» der Schalter 14.6 und 14.7 und einer Zifferneinstellung an den Schaltern 14.5 und 14.8 erkannt, das Programm 3 eingestellt ist.

## Patentansprüche

1. Automatischer Anrufbeantworter zur Abgabe mindestens eines vorgegebenen Ansagetextes in die Fernsprechleitung mit einem mikroprozessorgesteuerten (13) elektronischen Textgeber zur Abgabe von in digitaler Form in Festwertspeichern (3) gespeicherten Textteilen, wobei ein Ansagetext jeweils aus fest vorgegebenen Textteilen und aus variablen, aus Ziffern bestehenden, in die fest vorgegebenen Textteile einfügbaren Textteilen zusammengesetzt ist, dadurch gekennzeichnet, dass für jeden einer frei vorgebbaren Ziffer entsprechenden Textteil ein mechanisch gesteuerter Vorwahlschalter (14) mit mehreren Schaltstellungen vorgesehen ist, wobei jeder Schaltstellung eine Zahl aus der Menge der ganzen Zahlen von 0 bis 9 oder eine «Aus»-Stellung zugeordnet ist, und durch die jeweilige Stellung eines Vorwahlschalters festgelegt ist, welche gespeicherte Ziffer als variabler Textteil an einer durch diesen Schalter vorgegebenen Stelle des Ansagetextes programmgesteuert eingefügt wird.

2. Anrufbeantworter nach Anspruch 1, dadurch gekennzeichnet, dass jeder Vorwahlschalter (14) elf Schaltstellungen aufweist, die den Zahlen von 0 bis 9 und der Stellung «Aus» zugeordnet sind.

3. Anrufbeantworter nach Anspruch 1 oder 2, dadurch gekennzeichnet, dass bei aus mehrstelligen Ziffern bestehenden variablen Textteilen jeder Stelle einer Ziffer ein bestimmter Vorwahlschalter (14) zugeordnet ist.

4. Anrufbeantworter nach Ansprüche 1 bis 3, dadurch gekennzeichnet, dass bei mehreren vorgebbaren Ansagetexten mit unterschiedlichen variablen Textteilen mindestens ein Teil der Vorwahlschalter (14) jeweils mehreren, in verschiedene Ansagetexte an unterschiedlichen Stellen einfügbaren Ziffern zugeordnet sind, wobei die Auswahl eines bestimmten Ansagetextes durch eine bestimmte Kombination betätigter Vorwahlschalter (14) vorgebbar ist.

5. Anrufbeantworter nach Anspruch 4, gekennzeichnet durch Anzeigevorrichtungen (15) zur Anzeige der jeweils eingestellten bestimmten Kombination von Vorwahlschaltern (14).

6. Anrufbeantworter nach Anspruch 4 oder 5, dadurch gekennzeichnet, dass zur Abgabe von vier verschiedenen Ansagetexten, enthaltend eine Uhrzeit und/oder ein Datum oder eine Ausweichrufnummer, eine Reihe von N nebeneinander angeordneten Vorwahlschaltern (14) vorgesehen ist, wobei N die maximale für eine Ausweichrufnummer benötigte Stellenzahl ist, und jeder Vorwahlschalter (14) einer Stelle einer Rufnummer zugeordnet ist, während zusätzlich eine bestimmte erste Gruppe aufeinanderfolgender Vorwahlschalter (14) den Einzelziffern der Datums-Angabe, und eine bestimmte zweite Gruppe aufeinanderfolgender Vorwahlschalter (14) der Uhrzeit-Angabe zugeordnet ist, wobei zwischen beiden Gruppen mindestens ein Vorwahlschalter angeordnet ist, der keiner dieser beiden Gruppen angehört.

## Revendications

1. Répondeur automatique destiné à transmettre au moins un texte d'information préparé dans le câble téléphonique, au moyen d'un lecteur de texte électronique (13) commandé par micro-processeur permettant de communiquer des parties de texte enregistrées sous forme numérique dans les mémoires à données fixe (3), chaque texte à communiquer étant constitué de parties de texte préparées d'une manière définitive et de parties variables constituées de chiffres pouvant être introduites dans les parties de textes préparées pour emploi permanent, caractérisé en ce, que pour chaque partie de texte correspondant à un chiffre pouvant être choisi librement, est prévu un interrupteur de présélection (14) à commande mécanique avec plusieurs positions d'enclenchement, dans lequel chaque position d'enclenchement correspond à un chiffre de l'ensemble des nombres entiers de 0 à 9 ou à une position «off», chacune de ces positions d'un interrupteur de présélection déterminant quel est le chiffre enregistré en mémoire comme partie de texte variable qui doit être introduit à un endroit du texte d'information prédéterminé par cet interrupteur.

2. Répondeur automatique suivant revendication 1, caractérisé en ce que chaque interrupteur de présélection (14) comporte 11 positions d'enclenchement qui corresondent aux chiffres de 0 à 9 et à la position «off».

3. Répondeur automatique suivant revendication 1 ou 2, caractérisé en ce que, en cas de partie de texte variable constituée de nombres à plusieurs chiffres, chaque chiffre d'un nombre dépend d'un interrupteur de présélection déterminé (14).

Répondeur automatique suivant l'une des revendications 1 à 3, caractérisé en ce que, en cas de textes d'information multiples pouvant être insérés avec différentes parties de textes variables, au moins une partie des interrupteurs de présélection (14) correspondent chacun à plusieurs nombres pouvant être introduits dans différents textes d'information à des endroits différents, le choix d'un texte d'information déterminé pouvant être obtenu grâce à une combinaison déterminée d'interrupteurs de présélection (14) à actionner.

5. Répondeur automatique suivant revendication 4, caractérisé par des dispositifs d'affichage (15) pour indiquer chaque fois quelle est la combinaison déterminée d'interrupteurs de présélection (14) qui a été choisie.

6. Répondeur automatique suivant revendication 4 ou 5, caractérisé en ce que, pour communiquer quatre textes d'informations différents contenant une heure et/ou une date ou un autre numéro d'appel, il est prévu une série de N interrupteurs de présélection (14) disposés l'un à côté de l'autre, où N est le nombre de chiffres maximum nécessaire pour un numéro d'appel de remplacement, et chaque interrupteur de présélection (14) correspondant à un chiffre d'un numéro d'appel, tandis qu'un certain premier groupe d'interrupeurs de présélection successifs (14) correspond aux différents chiffres de l'indication de la date et qu'un second groupe d'interrupteurs de présélection (14) successifs correspond à l'indication de l'heure, alors qu'entre les deux groupes il existe au moins un interrupteur de présélection qui n'appartient à aucun de ces deux groupes.

**Claims**

1. Automatic telephone responder for emitting at least one predetermined announcement text into the telephone line, comprising a microprocessor-controlled, electronic text transmitter (13) for transmitting text portions which are stored in digital form in set-value memories (3), one announcement text each being composed of preset text portions and variable text portions consisting of digits and being insertable in said pre-set text portions, characterized in that, for each text portion corresponding to a freely selectable number, a mechanically controlled preselection switch (14) having a plurality of switch positions is provided, whereby one number out of the aggregation of the integral numbers from 0 to 9 or an «off»-position, is associated with each switch position, and whereby the respective position of a preselection switch determines which of the stored numbers is inserted in program-controlled manner in said announcement text as a variable text portion at a position which is preselcted by said switch.

2. Automatic telephone responder as claimed in claim 1, characterized in that, each of the preselection switches (14) comprises eleven switch positions corresponding to the numbers from 0 to 9 and the «off«-position.

3. Automatic telephone responder as claimed in claim 1 or 2, characterized in that, in cases of variable text portions comprising multi-digit numbers, one specific preselection switch (14) is associated with each digit of a number.

4. Automatic telephone responder as claimed in one of claims 1 to 3, characterized in that, in case of a plurality of preselectable announcement texts containing different variable text portions, at least part of the preselection switches (14) is associated with a plurality of digits adapted to be inserted in different announcement texts at different locations, whereby the selection of a specific announcement text is achieveable by a specific combination of actuated preselection switches (14).

5. Automatic telephone responder as claimed in claim 4, characterized by indicating devices (15) for showing the adjusted specific combination of preselection switches (14).

6. Automatic telephone responder as claimed in claim 4 or 5, characterized in that, for emitting four different announcement texts containing a clock time and/or a date or an alterntive telephone number, a series of N preselection switches (14) is arranged side-by-side, whereby N represents the maximum number of digits which are necessary for the formation of an alternative telephone number, and each preselection switch (14) is associated with one digit of a telephone number, whereas, additionally, a specific first group of successive preselection switches (14) is associated with the date indication, and a specific second group of successive preselection switches (14) is associated with the clock time indication, at least one preselection switch being arranged between both groups which preselection switch belongs to none of these two groups.

**FIG.1**

14

| 3 | 1 | – | 1 | 2 | – | – | 0 | 9 | – | – | – | – | – | – | – |

FIG.2a

Datum ←→ | ←Uhrzeit→

14.1  14.2  14.3  14.4  14.5  14.6  14.7  14.8  14.9  14.10  14.11  14.12  14.13  14.14  14.15  14.16

Rufnummer

14

| 0 | 2 | 0 | 8 | 4 | 2 | 0 | 0 | 7 | 1 | – | – | – | – | – | – |

FIG.2b